# EUROPÄISCHE PATENTANMELDUNG

(11) **EP 4 303 572 A1**
(43) Veröffentlichungstag der Anmeldung: **10.01.2024**
(21) Anmeldenummer: 23177184.1
(22) Anmeldetag: 05.06.2023
(51) Int. Cl.: G01N 21/88, G01N 21/89

(54) **VERFAHREN ZUR VISUELLEN INSPEKTION DER OBERFLÄCHE EINES OBJEKTS**

(30) Priorität: 04.07.2022 DE 102022206812
(71) Anmelder: Continental Reifen Deutschland GmbH, 30165 Hannover (DE)
(72) Erfinder: Kirschning, Oliver, 30165 Hannover (DE)
(74) Vertreter: Continental Corporation

(57) **Zusammenfassung**

Die Erfindung betrifft ein Verfahren zur visuellen Inspektion der Oberfläche eines Objekts (1), bei welchem ein zu inspizierendes Objekt (1) bereitgestellt und in einen Prüfbereich (9) eingebracht, im Prüfbereich (9) von mindestens einer Kamera (2) oberflächig gescannt und nachfolgend aus dem Prüfbereich (9) abgeführt wird, wobei das bereitgestellte Objekt (1) in einen Flugzustand überführt wird und durch den Prüfbereich (9) fliegt, während es von der mindestens einen Kamera (2) oberflächig gescannt wird.

## Beschreibung

Die Erfindung betrifft ein Verfahren zur visuellen Inspektion der Oberfläche eines Objekts, bei welchem ein zu inspizierendes Objekt bereitgestellt und in einen Prüfbereich eingebracht, im Prüfbereich von mindestens einer Kamera oberflächig gescannt und nachfolgend aus dem Prüfbereich abgeführt wird.

Derartige Verfahren zur visuellen Inspektion der Oberfläche eines Objekts, beispielsweise eines Bauteils, sind vielfältig bekannt und werden insbesondere in der Qualitätskontrolle von Fertigungsprozessen eingesetzt, um eine große Zahl von in Serien produzierten Bauteilen bzw. Objekten auf die Einhaltung der gewünschten Fertigungsvorgaben, zum Beispiel deren Abmessungen, zu überprüfen. Hierbei ist es jedoch häufig notwendig, die Objekte von allen Seiten zu prüfen. Wenn die Objekte im Prüfbereich zum Beispiel auf einer Platte liegen oder in einem Greifer gehalten werden, ist zwangsläufig ein Teil der Objektoberfläche verdeckt. Daher muss das Objekt für eine vollständige Inspektion bewegt oder gedreht werden, um die vormals verdeckten Bereiche der Oberfläche für die Inspektion sichtbar zu machen. Dies gilt sowohl bei der Inspektion durch einen Menschen wie auch durch ein Kamerasystem. Wenn ein Kamerasystem zum Einsatz kommt, finden häufig komplexe Analysetools Anwendung, die die Bilddaten des Kamerasystems hinsichtlich der Einhaltung der geforderten Parameter auswerten.

Es ist bereits vorgeschlagen worden, dass zu inspizierende Objekt auf eine Glasplatte zu legen, um es auch von unten inspizieren zu können. Hierbei entstehen jedoch Probleme durch Reflexionen der Glasplatte, Verschmutzungen, oder Kratzer auf der Glasplatte, die das Messergebnis beeinflussen können.

Selbst wenn nur ausgewählte Teile der Oberfläche eines Objekts inspiziert werden müssen, muss das Objekt entsprechend ausgerichtet werden, um alle relevanten Teile der Oberfläche für die Inspektion zugänglich zu machen.

Es ist somit bislang ein hoher Aufwand für die Manipulation von Objekten notwendig, um alle Teile der Oberfläche zu inspizieren, woraus eine hohe Zykluszeit und hoher Anlagenaufwand resultieren.

Aufgabe der Erfindung ist es, ein Verfahren der eingangs genannten Art vorzuschlagen, welches die Nachteile des Standes der Technik überwindet.

Zur Lösung der gestellten Aufgabe wird erfindungsgemäß ein Verfahren gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass das bereitgestellte Objekt in einen Flugzustand überführt wird und durch den Prüfbereich fliegt, während es von der mindestens einen Kamera oberflächig gescannt wird.

Durch diese erfindungsgemäße Ausgestaltung wird es möglich, eine Vielzahl von zu prüfenden Objekten aufeinanderfolgend in kürzester Zeit zuverlässig oberflächig zu inspizieren, da das Problem einer teilweisen Abdeckung bzw. Nichtsichtbarkeit der zu inspizieren Oberfläche nicht mehr besteht.

Nach einem Vorschlag der Erfindung ist eine einzelne Kamera im Prüfbereich vorgesehen, um das zu inspizierende Objekt oberflächig zu scannen. Hierbei ist es sodann erforderlich, dem Objekt während seines Fluges durch den Prüfbereich einen Drall oder ähnliche Rotationsbewegung aufzuerlegen, sodass mit mehreren aufeinanderfolgenden Bildern der einzelnen Kamera die gesamte Oberfläche des Objekts während des Fluges durch den Prüfbereich inspiziert werden kann.

Nach einem weiteren Vorschlag der Erfindung kommen jedoch mehrere dem Prüfbereich zugeordnete Kameras zum Einsatz, die in voneinander verschiedenen Aufnahmewinkeln angeordnet sind, sodass von den mehreren Kameras entsprechend mehrere Bilder des zu prüfenden bzw. zu inspizierenden Objektes aus unterschiedlichen Aufnahmewinkeln zu gleicher Zeit erstellt und ausgewertet werden können. Die Anordnung der Kameras in unterschiedlichen Aufnahmewinkeln stellt dabei sicher, dass das zu inspizierende Objekt in allen zu inspizierenden Bereichen seiner Oberfläche gescannt wird.

Nach einem weiteren Vorschlag der Erfindung wird das Objekt auf eine durch den Prüfbereich verlaufende ballistische Flugkurve geworfen, die sich mit Berechnungen und/oder empirisch leicht vorhersagen lässt, sodass die entsprechende Anzahl an Kameras in der gewünschten Weise entlang der Flugkurve ausgerichtet werden kann.

Nach einem weiteren Vorschlag der Erfindung kann das Objekt auch im freien Fall durch den Prüfbereich fallen und während des Durchflugs durch den Prüfbereich von der mindestens einen Kamera oberflächig gescannt werden.

Die Auslösung der mindestens einen Kamera wird nach einem weiteren Vorschlag der Erfindung über einen Sensor gesteuert, der ein in den Prüfbereich eintretendes Objekt erfasst und die mindestens eine Kamera auslöst. Bei diesem Sensor kann es sich beispielsweise um eine Lichtschranke handeln, die entlang der Falllinie oder ballistischen Flugkurve des Objekts angeordnet ist.

In einer möglichen Ausgestaltung des erfindungsgemäßen Verfahrens ist ein Zuführförderband und ein Abführförderband für eine Vielzahl von Objekten vorgesehen, die derart zueinander angeordnet sind, dass auf dem Zuführförderband zugeführte Objekte von diesem auf das Abführförderband fliegend übergeben werden, wobei sie den Prüfbereich durchfliegen, in welchem die mindestens eine Kamera angeordnet ist. Unter einer solchen fliegenden Übergabe wird sowohl eine Bewegung entlang einer ballistischen Flugkurve als auch ein freier Fall verstanden.

Weitere Ausgestaltungen und Einzelheiten der Erfindung werden nachfolgend anhand der ein Ausführungsbeispiel darstellenden Zeichnung erläutert.

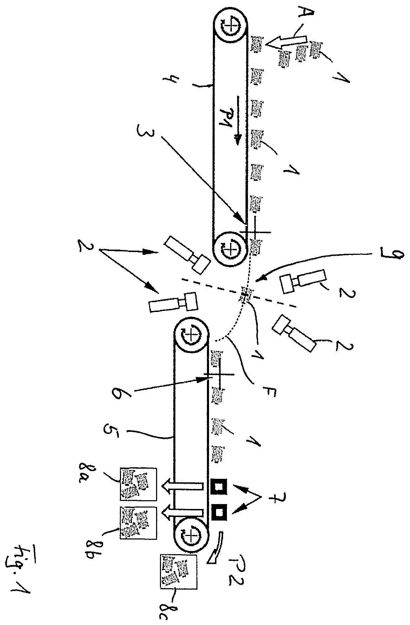

Die einzige Figur zeigt dabei eine Anordnung aus einem zwischen nicht näher bezeichneten Umlenkwalzen umlaufenden Zuführförderband 4 und einem nachfolgend in einem gewissen Abstand angeordneten weiteren, zwischen nicht näher bezeichneten Umlenkwalzen umlaufenden Abführförderband 5 sowie mehreren in einem Prüfbereich 9 angeordneten Kameras 2 zur Qualitätskontrolle der nachfolgend noch näher beschriebenen Objekte 1, die auf dem Zuführförderband 4 bereitgestellt werden und vom Zuführförderband 4 auf das Abführförderband 5 übergeben werden.

Diese Anordnung dient zur Qualitätskontrolle von gleichförmigen Objekten 1, bei denen es sich beispielsweise um Spikes eines Fahrzeugreifens handeln kann, ohne jedoch hierauf beschränkt zu sein. Die Objekte 1 werden gemäß Pfeil A aus einer nicht näher dargestellten Bevorratung, beispielsweise einer Fertigungsmaschine mit anschließendem Objektspeicher dem Zuführförderband 4 zugeführt und in gleichmäßiger Reihung auf diesem aufgelegt. Das Zuführförderband 4 fördert die aufgelegten Objekte 1 mit einer entsprechenden Fördergeschwindigkeit in Pfeilrichtung P1 zum Prüfbereich 9, der in Förderrichtung des Zuführförderbandes 4 betrachtet am Ende desselben beginnt und bis zum Abführförderband 5 reicht.

Das Zuführförderband 4 und das Abführförderband 5 sind demgemäß mit einem gewissen Abstand zueinander angeordnet, welcher den Prüfbereich 9 definiert und welchen die auf dem Zuführförderband 4 aufliegenden Objekte 1 überwinden müssen, um zum Abführförderband 5 zu gelangen. Dies erfolgt im dargestellten Ausführungsbeispiel dadurch, dass aufgrund der eingestellten Fördergeschwindigkeit des Zuführförderbandes 4 die auf diesem aufliegenden Objekte 1 in Förderrichtung betrachtet am Ende des Zuführförderbandes 4 von diesem abgeworfen und entsprechend in einen Flugzustand überführt werden, in welchem sie den Prüfbereich 9 entlang einer vorausberechneten ballistischen Flugkurve F durchfliegen, bevor sie auf dem Abführförderband 5 landen und von diesem weitergefördert werden.

Die entlang der ballistischen Flugkurve F durch den Prüfbereich 9 fliegenden Objekte 1 werden im Bereich der gestrichelt dargestellten Ebene von im dargestellten Ausführungsbeispiel 4 mit unterschiedlichen Aufnahmewinkeln positionierten Kameras 2 erfasst und oberflächig gescannt, d. h. es werden entsprechende Fotos des Objektes 1 im Prüfbereich 9 erstellt. Die Anordnung der Kameras 2 ist so gewählt, dass sich jeweils zwei paarweise gegenüberstehen. Durch einen entsprechenden räumlichen Versatz ist überdies sichergestellt, dass das durch den Prüfbereich 9 fliegende Objekt 1 von den Kameras 2 vollständig oberflächig gescannt wird, d. h. auf den vorliegenden Bildern ist die gesamte Oberfläche des Objekts 1 hinterlegt und kann von einer entsprechenden, hier nicht dargestellten Bildauswerteeinrichtung geprüft werden, zum Beispiel auf das Vorliegen entsprechender Sollwertvorgaben für Abmessungen oder Bauteilgeometrie oder auf die Einhaltung von vorgegebenen Qualitätsmerkmalen oder auch zur Sortierung nach vorgegebenen Varianten.

Die Auslösung der Kameras 2 während des Fluges des Objekts 1 durch den Prüfbereich 9 kann beispielsweise von einem im Bereich des Zuführförderbandes 4 angeordneten Sensor 3, beispielsweise einer Lichtschranke, vorgenommen werden.

Am Ende der ballistischen Flugkurve F landet das von den Kameras 2 oberflächig gescannte Objekt 1 auf dem Abführförderband 6 und wird in Pfeilrichtung P2 weiter gefördert. Am Ende des Abführförderbandes 6 können die einzelnen Objekte 1 nach Maßgabe der Bildauswertung der von den Kameras 2 gescannten Oberfläche entweder mittels geeigneter Vorrichtungen, zum Beispiel Luftdüsen 7, vom Abführförderband 6 in entsprechend bereitgestellte Behälter 8a, 8b sortiert werden oder aber das Abführförderband 6 vollständig durchlaufen, um in einen Sammelbehälter 8c zu gelangen. Die Auslösung der Luftdüsen 7 kann beispielsweise über einen am Abführförderband 5 angeordneten weiteren Sensor 6, zum Beispiel eine Lichtschranke, erfolgen.

Mit der vorangehend erläuterten Anordnung ist es möglich, eine Vielzahl von Objekten 1 in kürzester Zeit mit Kameras 2 auf die Einhaltung von Sollwertvorgaben zu untersuchen, ohne dass eine Manipulation, zum Beispiel Drehung oder Repositionierung der Objekte 1 erforderlich wird, um sämtliche Oberflächenbereiche abzuscannen.

Anstelle eines Freifluges entlang einer ballistischen Kurve F kann die Anordnung auch so gewählt werden, dass die Objekte 1 in freiem Fall durch den Prüfbereich 9 fliegen.

### Bezugszeichenliste:

- 1:: Objekt
- 2:: Kamera
- 3:: Sensor für Kameraauslösung
- 4:: Zuführförderband
- 5:: Abführförderband
- 6:: Sensor für Luftdüsen
- 7:: Luftdüsen
- 8a:: Sammelbehälter
- 8b:: Sammelbehälter
- 8c:: Sammelbehälter
- 9:: Prüfbereich

- A:: Aufgaberichtung
- F:: ballistische Flugkurve
- P1:: Förderrichtung Zuführförderband
- P2:: Förderrichtung Abführförderband

## Patentansprüche

1. Verfahren zur visuellen Inspektion der Oberfläche eines Objekts (1), bei welchem ein zu inspizierendes Objekt (1) bereitgestellt und in einen Prüfbereich (9) eingebracht, im Prüfbereich (9) von mindestens einer Kamera (2) oberflächig gescannt und nachfolgend aus dem Prüfbereich (9) abgeführt wird, da du rc h gekennzeichnet, dass das bereitgestellte Objekt (1) in einen Flugzustand überführt wird und durch den Prüfbereich (9) fliegt, während es von der mindestens einen Kamera (2) oberflächig gescannt wird.

2. Verfahren nach Anspruch 1, **dadurch gekennzeichnet, dass** das Objekt (1) auf eine durch den Prüfbereich (9) verlaufende ballistische Flugkurve (F) geworfen wird.

3. Verfahren nach Anspruch 1, **dadurch gekennzeichnet, dass** das Objekt (1) im freien Fall durch den Prüfbereich (9) fällt.

4. Verfahren nach einem der Ansprüche 1 bis 3, **dadurch gekennzeichnet, dass** ein Sensor (3) vorgesehen ist, der ein in den Prüfbereich (9) eintretendes Objekt (1) erfasst und die mindestens eine Kamera (2) auslöst.

5. Verfahren nach Anspruch 4, **dadurch gekennzeichnet, dass** der Sensor (3) vor einer Lichtschranke gebildet ist.

6. Verfahren nach einem der Ansprüche 1 bis 5, **dadurch gekennzeichnet, dass** mehrere dem Prüfbereich (9) zugeordnete Kameras (2) mit voneinander verschiedenem Aufnahmewinkel vorgesehen sind.

7. Verfahren nach einem der Ansprüche 1 bis 6, **dadurch gekennzeichnet, dass** ein Zuführförderband (4) und ein Abführförderband (5) für eine Vielzahl von Objekten (1) vorgesehen sind, die derart zueinander angeordnet sind, dass auf dem Zuführförderband (4) zugeführte Objekte (1) von diesem auf das Abführförderband (5) fliegend übergeben werden, wobei sie den Prüfbereich (9) durchfliegen, in welchem die mindestens eine Kamera (2) angeordnet ist.

8. Verfahren nach einem der Ansprüche 1 bis 7, **dadurch gekennzeichnet, dass** die Bilder der mindestens einen Kamera (2) in einer Bildauswertungseinrichtung ausgewertet und mit Sollwertvorgaben verglichen werden.
